Europäisches Patentamt

(19) European Patent Office

Office européen des brevets

(11) Numéro de publication: **0 244 305**
**B1**

(12) # FASCICULE DE BREVET EUROPÉEN

(45) Date de publication du fascicule du brevet:
04.10.89

(51) Int. Cl.⁴: **C 03 B 23/025, C 03 B 35/16**

(21) Numéro de dépôt: **87400936.8**

(22) Date de dépôt: **23.04.87**

(54) Transfert d'objets en plaques d'un convoyeur à un autre dispositif et application au bombage de plaques de verre.

(30) Priorité: **29.04.86 FR 8606171**

(43) Date de publication de la demande:
**04.11.87 Bulletin 87/45**

(45) Mention de la délivrance du brevet:
**04.10.89 Bulletin 89/40**

(84) Etats contractants désignés:
**BE CH DE ES FR GB IT LI SE**

(56) Documents cité:
**FR-A-1 420 731**

(73) Titulaire: **SAINT- GOBAIN VITRAGE, "Les Miroirs"**
**18, avenue d'Alsace, F-92400 Courbevoie (FR)**

(72) Inventeur: **Petitcollin, Jean- Marc, 12, rue de**
**Verdun, Le Plessis Brion F-60150 Thourotte (FR)**
Inventeur: **Philibert, Daniel, 5, avenue de Caumont,**
**F-60150 Thourotte (FR)**

(74) Mandataire: **Leconte, Jean- Gérard, Saint- Gobain**
**Recherche 39, Quai Lucien Lefranc, F-93304**
**Aubervilliers Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 244 305 B1

## Description

La présente invention concerne le transfert d'objets en plaques, tels des plaques de verre, d'un convoyeur à un autre dispositif, dit dispositif de réception, notamment une forme de bombage.

Il est connu lors des opérations de bombage de plaques de verre, de transférer lesdites plaques, d'un convoyeur horizontal sur lequel elles arrivent, à une forme de bombage, constituée par exemple par un cadre à profil courbe ouvert en son centre, à l'aide d'un dispositif de transfert qui déplace lesdites plaques verticalement, les prenant sur le convoyeur d'arrivée, les soulevant, puis les relachant et/ou redescendant, pour les poser sur la forme de bombage qui entre temps a pu être mise en place sous le dispositif de transfert.

De tels dispositifs de transfert sont décrits par exemple dans les brevets EP-A1-3 391 (brevet Mc. MASTER) FR-A-2 085 464 (brevet SAINT-GO-BAIN).

La préhension des plaques de verre s'effectue généralement grâce à une dépression qui s'exerce soit au travers de l'organe préhenseur du dispositif de transfert (EP-A1-3391) soit essentiellement à la périphérie dudit organe (FR-A-2 085 464).

Un tel dispositif de transfert présente l'inconvénient de mettre la face supérieure des plaques de verre en contact avec la surface de l'organe préhenseur, ce qui peut engendrer des défauts optiques du verre, abîmer la face supérieure des plaques de verre ou leur revêtement par exemple en émail.

Il présente également l'inconvénient d'ajouter à l'effet de gravité qui s'exerce lorsque la plaque de verre a été transférée sur la forme de bombage, l'effet de l'inertie, du fait de la difficulté de transférer la plaque de verre en la déposant délicatement sur la forme, sans la faire chuter.

En outre, un tel dispositif nécessite toute une machinerie pour assurer le mouvement de l'organe préhenseur et lesdits mouvements demandent un certain temps qui d'une part limite les cadences, d'autre part est préjudiciable à une bonne trempe du verre qui suit pratiquement toujours le bombage.

La présente invention propose un transfert dans lequel les problèmes posés par les procédés et dispositifs antérieurs ne se posent plus.

Pour cela, elle propose de faire défiler la plaque de verre ou autre, sur un convoyeur, de lui laisser continuer seule sa trajectoire au-delà de l'extrémité du convoyeur, puis de la recevoir sur le dispositif de réception, disposé de telle façon qu'il soit sensiblement parallèle à la trajectoire de la plaque de verre au moment de sa rencontre avec ledit autre dispositif.

Avantageusement, le dispositif de réception de la plaque de verre est monté mobile et la plaque de verre réceptionnée par ledit dispositif prolonge sa trajectoire du fait du déplacement dudit dispositif.

Avantageusement, le chemin selon lequel peut se déplacer le dispositif de réception, et la trajectoire de la plaque, notamment de verre, lancée au-delà du convoyeur d'amenée, font au moment de la réception sur ledit dispositif, un angle qui n'est pas supérieur à une quinzaine de degrés et de préférence une dizaine de degrés.

Avantageusement encore, le dispositif de réception commence à avancer avant la réception de la plaque.

Le transfert tel que proposé précédemment trouve une application dans le bombage de plaques de verre défilant à plat, le dispositif de réception comprenant une forme de bombage, par exemple un cadre de bombage.

La plaque de verre peut dans certains cas être ensuite envoyée à un poste de trempe.

Le procédé de transfert d'objets en plaques selon l'invention s'applique plus particulièrement au bombage et à la trempe ou au recuit de plaques de verre qui sont amenées sur un transporteur sensiblement horizontal, chauffées au cours de leur évolution sur le transporteur, accélérées si nécessaire en évoluant ensuite sur un convoyeur, puis transférées par prolongement de leur trajectoire au-delà du convoyeur, sur un dispositif de réception comprenant une forme de bombage tel un cadre, sur lequel elles acquièrent un profil courbe et puis acheminées jusqu'à un poste de trempe ou de recuit par déplacement du dispositif de réception.

L'invention propose également un dispositif pour mettre en oeuvre le procédé selon l'invention qui comprend un convoyeur sur lequel les plaques défilent à vitesse élevée, un dispositif de réception disposé à un niveau inférieur à celui de l'extrémité du convoyeur et au delà de ladite extrémité dans le sens et la direction de défilement du convoyeur, disposé également de façon sensiblement parallèle à la trajectoire des plaques au moment de leur rencontre avec ledit dispositif de réception, et de toute façon suivant un angle dans le plan vertical avec cette trajectoire qui ne soit pas supérieur à une quinzaine de degrés et de préférence à une dizaine de degrés.

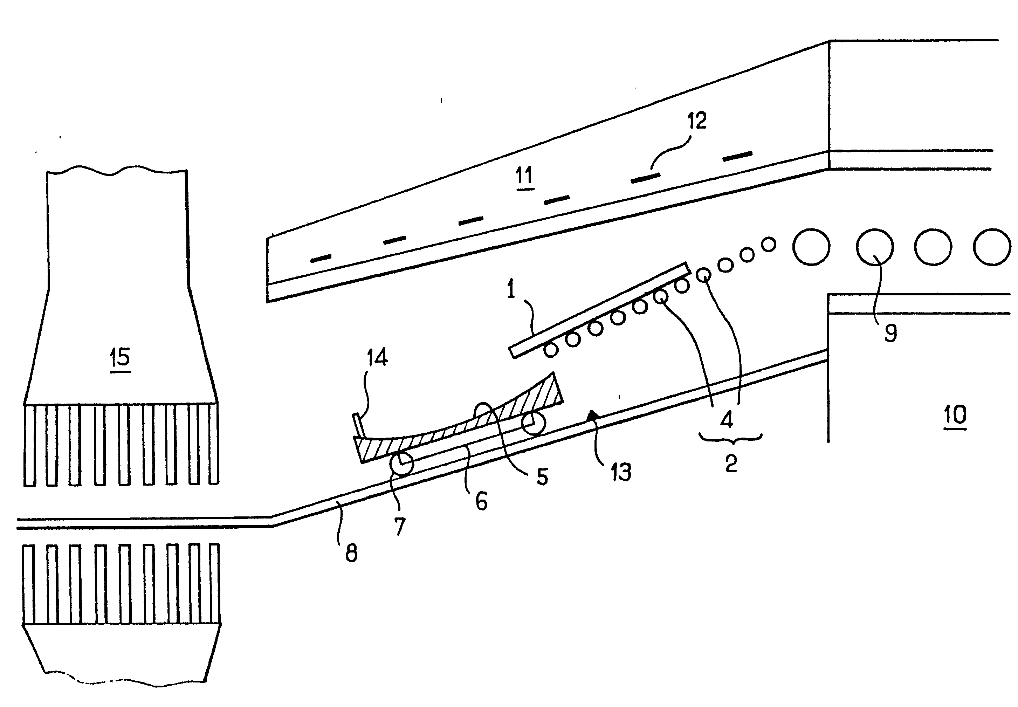

L'invention sera maintenant décrite plus en détail en se référant à la figure jointe qui représente:

. un schéma de l'installation de transfert selon l'invention mise en oeuvre dans une ligne de bombage et de trempe de feuilles de verre.

La figure montre le transfert de plaques de verre 1, d'un convoyeur 2 à un dispositif de réception 5, en l'occurrence une forme de bombage.

On aperçoit la plaque de verre 1 sur les rouleaux 4 de l'extrémité du convoyeur 2, ainsi qu'un dispositif de réception 5 disposé à un niveau inférieur à celui du dernier rouleau 4, au-delà de l'extrémité du convoyeur 2.

Ce dispositif de réception 5, ici un cadre de bombage constitué par un anneau à profil courbe, est porté par un chariot 6, équipé de galets 7 pour pouvoir rouler sur des rails 8.

Le convoyeur 2 fait suite à un transporteur 9 disposé plus en amont à l'intérieur d'un four de réchauffage 10.

Une chapelle chauffante 11 équipée de moyens chauffants 12 est disposée au-dessus du convoyeur 2.

L'extrémité du convoyeur 2 et le dispositif de réception 5 sont disposés de telle façon qu'au moment de la réception d'une plaque de verre, ledit dispositif de réception 5 et la plaque de verre soient aussi parallèles que possible, un faible angle dans le plan vertical étant cependant toléré à condition qu'il reste faible et ne soit pas supérieur à environ 15° et de préférence 10°.

Pour ce faire, dans le mode de réalisation illustré, le convoyeur 2 est incliné vers le bas et de la même façon les rails 8 sont inclinés vers le bas. Cependant, d'autres orientations sont possibles. Le convoyeur 2 et les rails 8 ou le plan moyen du dispositif de réception sont sensiblement parallèles. Ils peuvent cependant faire entre eux un certain angle dans le plan vertical qui ne doit malgré tout pas être supérieur à environ 15° et de préférence de l'ordre de 10°.

La plaque de verre peut être réceptionnée sur un dispositif de réception immobile; dans ce cas, dans la mesure où les rails 8 sont en pente, un cran d'arrêt 13 est prévu pour maintenir ledit chariot dans la position souhaitée.

La plaque de verre peut également être réceptionnée sur un dispositif de réception déjà en mouvement, soit que le mouvement résulte d'une mécanisation, soit qu'il résulte de l'inclinaison des rails, le dépassement du cran d'arrêt étant dans ce dernier cas organisé par un moyen mécanique.

L'avant du dispositif de réception est avantageusement pourvu de butées 14 contre lesquelles viennent prendre appui les plaques de verre.

A la suite du poste de transfert peut être prévu un poste de trempe 15. Le chariot 6 roulant sur ses rails peut amener directement la plaque de verre qu'il porte jusqu'au poste de trempe 15. Le déplacement du chariot 6 peut être dû à la seule pente des rails 8 ou il peut résulter de la mécanisation.

On peut aussi prévoir un ou plusieurs autres transferts avant de passer au poste de travail suivant, par exemple au poste de trempe.

Lorsque le dispositif de réception comporte un cadre de bombage ou généralement une forme de bombage, le verre chauffé dans le four, maintenu à température élevée par la chapelle chauffante ensuite, peut se bomber seul par simple affaissement sur ce cadre ou cette forme. Un bombage complémentaire peut aussi être obtenu par pressage si désiré.

Le convoyeur 2 peut avoir une inclinaison fixe ou au contraire être dans le prolongement du transporteur 9 et ne s'incliner qu'après avoir reçu la plaque de verre.

De préférence, pour éviter un affaissement du verre fortement chauffé, entre les rouleaux 4 du convoyeur 2, ceux-ci sont de petit diamètre et disposés suivant un pas serré. En outre, à la fois pour éviter l'affaissement du verre, et pour faire prendre aux plaques de verre une trajectoire tendue au-delà du convoyeur 2, la vitesse de rotation de ces rouleaux 4 peut être élevée. Avantageusement l'entraînement de ces rouleaux 4 sera indépendant de celui des rouleaux du transporteur 9 en amont.

Le chemin des rails 8 après la réception peut être varié. Ainsi par exemple, leur plan peut s'incliner perpendiculairement à la direction de progression des plaques de verre, pour favoriser ou au contraire défavoriser l'action de la gravité dans certaines portions des plaques de verre, et ainsi modifier l'affaissement qu'elles prennent.

L'installation selon l'invention fonctionne de la manière suivante: une feuille de verre défile sur le transporteur 9, à l'intérieur du four 10, et pendant son défilement s'échauffe, notamment jusqu'à sa température de bombage, ensuite elle passe sur le convoyeur 2. Dans certains cas la vitesse peut être augmentée sur le convoyeur 2. Eventuellement après avoir reçu la plaque de verre, le convoyeur 2 s'incline. La température de la plaque de verre est au moins maintenue grâce à la chapelle chauffante. A l'extrémité du convoyeur 2, la plaque de verre continue sa trajectoire au-delà dudit convoyeur 2 jusqu'à la rencontre de son bord avant avec les butées 14 et le bord avant du dispositif de réception 5, par exemple un cadre de bombage. Ces butées peuvent aussi servir de moyen de mise en référence parfaite de la plaque de verre par rapport au dispositif de réception.

Différents cas peuvent se produire:

. le dispositif de réception a été lancé dans le même sens que la plaque de verre avant de recevoir ladite plaque; dans ce cas on peut chercher à faire en sorte, qu'à la rencontre, le dispositif de réception et la plaque de verre aient sensiblement la même vitesse,

. le dispositif de réception est immobile et c'est l'impulsion que lui fournit la plaque de verre qui le fait avancer de façon que la plaque de verre poursuive sa trajectoire par mouvement de son dispositif de réception,

. le dispositif de réception est immobile et on le fait démarrer à la réception de la plaque de verre.

Dans tous les cas on fait en sorte que l'angle dans le plan vertical de la plaque de verre avec le dispositif de réception soit faible et pas supérieur à une quinzaine de degrés et de préférence pas supérieure à une dizaine de degrés.

L'avant du verre ayant accosté sur l'avant du dispositif de réception et celui-ci avançant, la totalité du verre va bientôt reposer sur la totalité du dispositif de réception.

Si ledit dispositif de réception est un cadre de bombage ou plus généralement une forme de bombage, le verre peut alors se bomber seul pendant que le chariot porteur du dispositif de réception avance. Une fois que le verre a été transféré sur un dispositif de réception quel qu'il soit, on peut aussi envisager de le bomber par tout autre moyen, ou de le travailler de toutes les façons désirées. On peut ainsi faire un bombage ou compléter le bombage déjà commencé si le dispositif de réception est une forme de bombage, par un pressage. On peut également envisager un ou plusieurs autres transferts du même type ou différents.

On peut aussi arrêter le mouvement du dispositif de réception comportant une forme de bombage pour laisser au verre le temps de s'affaisser.

On peut également, si la température du verre n'est pas suffisante au moment du transfert, pratiquer un chauffage plus poussé après le transfert, jusqu'à atteindre la température désirée pour le verre.

S'il s'agit d'une installation de bombage /trempe, le chariot peut amener le verre jusqu'à un poste de trempe.

L'invention peut être utilisée avec tout moyen de réception. Elle peut être utilisée aussi pour le transfert de tout objet en plaque, et elle est particulièrement recommandée pour le transfert de plaques fragiles qui comme le verre porté à sa température de ramolissement peut se déformer et/ou acquérir des défauts définitifs, par exemple des plaques de matières plastiques.

Dans le cadre du bombage/trempe de plaques de verre, l'invention est particulièrement intéressante lorsque les plaques de verre sont munies sur leur face supérieure de revêtements fragiles tels de l'émail. Dans ce cas, au cours du transfert du convoyeur à la forme de bombage, l'émail n'est jamais abimé puisqu'il n'entre au contact avec rien.

L'invention décrite fait appel à un convoyeur 2 à rouleaux droits. Cependant, on peut employer un autre type de convoyeur, convoyeur à coussin d'air par exemple, ou ledit convoyeur peut ne pas présenter une surface plane, et constituer un lit de conformation pour les plaques qui défilent sur lui. Ainsi par exemple dans le cas d'un convoyeur à rouleaux, lesdits rouleaux peuvent être à section variable (rouleaux en forme de diabolo, rouleaux ventrus) conférant ainsi aux plaques de verre un bombage avant leur transfert, bombage qui dans le cas où le dispositif de réception est une forme de bombage, constituera un prébombage. Egalement, ce convoyeur 2 ne fait pas obligatoirement progresser les plaques suivant une trajectoire rectiligne, la trajectoire peut être courbe et le convoyeur constitue ainsi un lit de conformation dans la direction longitudinale de progression des plaques.

Egalement ce convoyeur 2 peut être déformé dans les deux directions longitudinale et transversale.

L'invention a été décrite en faisant maintes fois référence à un dispositif de réception constitué par une forme de bombage qui pouvait en particulier être un cadre à profil courbe ouvert en son centre et à un poste de trempe auquel était amenée la plaque de verre après sa réception sur la forme de bombage. Mais le dispositif de transfert peut bien entendu être utilisé dans d'autres cas: pour du verre ou pour d'autres matériaux, dans un état proche du ramollissement ou non, en vue d'un bombage éventuellement suivi par une trempe, ou en vue d'un bombage seul, éventuellement suivi par un recuit ou toute autre opération, en vue de n'importe quel travail, à partir du moment où un transfert est nécessaire.

Après l'opération de réception, le dispositif de réception peut évoluer sur sa trajectoire jusqu'au poste de travail suivant, ou au contraire changer de trajectoire et être acheminé dans une autre direction.

Un seul dispositif de réception a été évoqué jusqu'alors, mais plusieurs dispositifs de réception identiques ou différents peuvent également être utilisés pour réceptionner, successivement les différentes plaques, notamment de verre qui se présentent à l'extrémité du convoyeur 2. Egalement plusieurs plaques peuvent évoluer côte à côte sur ce convoyeur 2, et être reçues simultanément sur plusieurs dispositifs de réception.

Ce dispositif de transfert, éventuellement appliqué au bombage, à la trempe de plaques de verre peut bien entendu être combiné avec d'autres techniques et dispositifs classiquement employés dans ce domaine ainsi par exemple pressage comme déjà évoqué, coussins gazeux pour prise en charge totale ou partielle du poids desdites plaques de verre, en particulier soufflage de gaz sous le dispositif de réception constitué par un cadre de formage ouvert en son centre pour contrôler le bombage au centre dudit cadre, etc...

**Revendications**

1. Procédé de transfert d'objets en plaques (1), tels des plaques de verre, d'un convoyeur (2) à un autre dispositif (5) dit dispositif de réception, dans lequel on fait défiler les objets en plaque (1) sur le convoyeur (2), on leur laisse continuer seuls leur trajectoire au-delà de l'extrémité du convoyeur (2) pour les recevoir sur le dispositif de réception (5) disposé de façon sensiblement parallèle à la trajectoire de plaques au moment de leur rencontre avec ledit dispositif de réception.

2. Procédé selon la revendication 1, dans lequel le dispositif de réception (5) est monté mobile et les plaques (1) réceptionnées par ledit dispositif (5) prolongent leur trajectoire du fait du déplacement dudit dispositif de réception.

3. Procédé selon la revendication 2, dans lequel le chemin selon lequel peut se déplacer le dispositif de réception (5) et la trajectoire des plaques (1) lancées au-delà du convoyeur (2), font au moment de la réception sur ledit dispositif un angle dans le plan vertical qui n'est pas supérieur à une quinzaine de degrés et de préférence pas supérieur à une dizaine de degrés.

4. Procédé selon l'une des revendications 2 ou 3, dans lequel le dispositif de réception (5) commence à avancer dans le sens de progression des plaques avant la réception de chacune desdites plaques (1).

5. Procédé selon l'une des revendications précédentes, dans lequel le dispositif de réception (5) comporte une forme de bombage, notamment un cadre de bombage, sur lequel chacune des plaques (1), notamment en verre, acquiert un profil courbe.

6. Procédé selon la revendication précédente, dans lequel les plaques (1), notamment en verre, sont soumises à un bombage complémentaire après leur transfert sur le dispositif de réception (5).

7. Procédé selon l'une des revendications précédentes, dans laquel les plaques (1), notamment en verre, acquièrent un bombage avant leur transfert du convoyeur (2) au dispositif de réception (5), notamment par défilement sur un lit de conformation faisant simultanément office de convoyeur.

8. Procédé selon l'une des revendications précédentes, dans lequel les plaques (1) notamment en verre, évoluent après leur réception sur le dispositif de réception (5) jusqu'à un autre poste de travail, notamment un poste de trempe (15), par déplacement dudit dispositif de réception (5) chargé d'une plaque (1) jusqu'à cet autre poste de travail.

9. Application du procédé selon l'une des revendications précédentes, au bombage et à la trempe ou au recuit de plaques (1) de verre qui sont amenées sur un transporteur (9) sensiblement horizontal, chauffées au cours de leur évolution sur le transporteur, accélérées si nécessaire en évoluant ensuite sur un convoyeur (2), puis transférées par prolongement de leur trajectoire au-delà du convoyeur, sur un dispositif de réception (5) comprenant une forme de bombage tel un cadre, sur lequel elles acquièrent un profil courbe et puis acheminées jusqu'à un poste de trempe (15) ou de recuit par déplacement du dispositif de réception (5).

10. Application selon la revendication 8, dans laquelle les plaques (1) subissent un chauffage complémentaire après leur transfert sur le dispositif de réception (5).

11. Dispositif pour la mise en oeuvre du procédé selon l'une des revendications précédentes, qui comprend un convoyeur (2) sur lequel les plaques (1) défilent à vitesse élevée, un dispositif de réception (5) disposé à un niveau inférieur à celui de l'extrémité du convoyeur et au-delà de ladite extrémité dans le sens et la direction de défilement du convoyeur, disposé également de façon sensiblement parallèle à la trajectoire des plaques (1) au moment de leur rencontre avec ledit dispositif de réception (5), et de toute façon suivant un angle dans le plan vertical avec cette trajectoire qui ne soit pas supérieur à une quinzaine de degrés et de préférence à une dizaine de degrés.

12. Dispositif selon la revendication 11, dans lequel le dispositif de réception (5) est monté mobile dans le sens et dans la direction de défilement du convoyeur, notamment en se déplaçant sur des rails (13).

13. Dispositif selon la revendication 12, dans lequel le convoyeur (2) et le chemin (13) de déplacement du dispositif de réception (5) forment entre eux un angle dans le plan vertical aussi faible que possible et de toute façon inférieur à 15° et de préférence 10°.

14. Dispositif selon l'une des revendications 12 ou 13, dans lequel le convoyeur (2) et le chemin (13) de déplacement du dispositif de réception (5) sont tous deux inclinés vers le bas.

15. Dispositif selon l'une des revendications 11 à 14, dans lequel le convoyeur (2) est monté pour être incliné après avoir pris en charge une plaque (1).

16. Dispositif selon l'une des revendications 11 à 15, dans lequel le dispositif de réception (5) est équipé de butées (14) pour le bord avant des plaques (1), disposées sur le bord avant dudit dispositif (5).

17. Dispositif selon l'une des revendications 11 à 16, dans lequel le dispositif de réception (5) comprend une forme de bombage, notamment un cadre de bombage, monté sur un chariot (6) mobile sur des rails (13).

## Claims

1. Process for the transfer of plate-like objects (1) such as glass plates, from a conveyor (2) to another so-called reception means (5), in which the plate-like objects (1) travel on conveyor (2), are alone allowed to continue their path beyond the end of the conveyor (2) so as to be received in the reception means (5) located substantially parallel to the path of the plates at the time when they encounter said reception means.

2. Process according to claim 1, wherein the reception means (5) is mounted in mobile manner and the plates (1) received by said means (5) continue their path as a result of the displacement of said reception means.

3. Process according to claim 2, wherein the path along which can move the reception means (5) and the path of the plates (1) beyond the conveyor (2) form, at the time of the reception on said means, an angle in the vertical plane not exceeding about 15° and preferably not exceeding about 10°.

4. Process according to one of the claims 2 or 3, wherein the reception means (5) starts to advance in the progression direction of the plates prior to the reception of each of said plates (1).

5. Process according to one of the preceding claims, wherein the reception means (5) incorporates a convex bending means, particularly a convex bending frame, on which of the in particular glass plates (1) acquires a curved profile.

6. Process according to the preceding claim, wherein the in particular glass plates (1) undergo complimentary convex bending following their transfer onto the reception means (5).

7. Process according to one of the preceding claims, wherein the in particular glass plates (1) acquire a convex bending prior to their transfer from conveyor (2) to reception means (5), particularly by their passage over a conformation bed which simultaneously serves as a conveyor.

8. Process according to one of the preceding claims, wherein the in particular glass plates (1) evolve following their reception on reception means (5) up to another working station, particularly an annealing station (15), by the displacement of the reception means (5) loaded with a plate (1) up to said other working station.

9. Application of the process according to one of the preceding claims, to the convex bending and annealing of the glass plates (1), which are supplied on a substantially horizontal transporting means (9), heated during their evolution on the transporting means, if necessary accelerated whilst then evolving on a conveyor (2), followed by transfer by the extension of their path beyond the conveyor on a reception means (5) incorporating a convex bending means, such as a frame, on which they acquire a curved profile and they are then passed to the annealing station (15) by displacement of the reception means (5).

10. Application according to claim 8, wherein the plates (1) undergo a complimentary heating following their transfer on the reception means (5).

11. Apparatus for performing the process according to one of the preceding claims comprising a conveyor (2) on which the plates (1) travel at high speed, a reception means (5) positioned at a level lower than that of the end of the conveyor and beyond said end in the direction and sense of travel of the conveyor, which is also arranged substantially parallel to the path of the plates (1) at the time when they encounter the reception means (5) and in accordance with an angle with said path in the vertical plane not exceeding about 15° and preferably not exceeding about 10°.

12. Apparatus according to claim 11, wherein the reception means (5) is mounted in mobile manner in the sense and direction of travel of the conveyor, particularly accompanied by movement on rails (13).

13. Apparatus according to claim 12, wherein the conveyor (2) and displacement path (13) of reception means (5) form between them an angle in the vertical plane which is as small as possible and below 15° and preferably 10°.

14. Apparatus according to one of the claims 12 or 13, wherein the conveyor (2) and the displacement path (13) of the reception means (5) are both downwardly inclined.

15. Apparatus according to one of the claims 11 to 14, wherein the conveyor (2) is mounted so as to be inclined after taking up a plate (1).

16. Apparatus according to one of the claims 11 to 15, wherein the reception means (5) is equipped with abutments (14) for the front edge of the plates (1) disposed on the front edge of said means (5).

17. Apparatus according to one of the claims 11 to 16, wherein the reception means (5) comprises a convex shaping means and in particular a frame mounted on a trolley (6) moving on rails (13).

## Patentansprüche

1. Verfahren zur Übergabe von plattenförmigen Gegenständen (1) wie etwa Glasplatten von einer Fördereinrichtung (2) auf eine andere, als Aufnahmevorrichtung dienende Vorrichtung (5), bei dem die plattenförmigen Gegenstände (1) auf der Fördereinrichtung (2) laufen, ihre Laufbahn über das Ende der Fördereinrichtung (2) hinaus fortsetzen und auf einer Aufnahmevorrichtung (5) aufgenommen werden, die im wesentlichen parallel zur Laufbahn der Platten zum Zeitpunkt ihres Auftreffens auf die Aufnahmevorrichtung (5) ist.

2. Verfahren nach Anspruch 1, bei dem die Aufnahmevorrichtung (5) beweglich angeordnet ist und die von der Vorrichtung (5) aufgenommen Platten (1) ihre Laufbahn aufgrund der Verschiebung der Aufnahmevorrichtung verlängern.

3. Verfahren nach Anspruch 2, bei dem die Bahn, längs derer sich die Aufnahmevorrichtung (5) bewegen kann, und die Laufbahn der am Ende der Fördervorrichtung (2) freigegebenen Platten (1) zum Zeitpunkt der Aufnahme auf der Vorrichtung einen Winkel in der vertikalen Ebene bilden, der nicht mehr als etwa 15°C, vorzugsweise nicht mehr als etwa 10° beträgt.

4. Verfahren nach Anspruch 2 oder 3, bei dem sich die Aufnahmevorrichtung (5) in der Richtung der Fortbewegung der Platten in Bewegung setzt, bevor die Platten (1) jeweils aufgenommen werden.

5. Verfahren nach einem der vorhergehenden Ansprüche, bei dem die Aufnahmevorrichtung (5) eine Biegeform, insbesondere einen Biegerahmen, aufweist, auf dem den insbesondere aus Glas bestehenden Platten (1) jeweils ein gekrümmtes Profil verliehen wird.

6. Vorrichtung nach dem vorhergehenden Anspruch, bei dem die insbesondere aus Glas bestehenden Platten (1) nach ihrer Übertragung auf die Aufnahmevorrichtung (5) einer ergänzenden Wölbung unterzogen werden

7. Verfahren nach einem der vorhergehenden Ansprüche, bei dem die insbesondere aus Glas bestehenden Platten (1) vor ihrer Übergabe von der Fördereinrichtung (2) auf die Aufnahmevorrichtung (5) insbesondere dadurch gebogen werden, daß sie auf einem gleichzeitig als Fördereinrichtung dienenden Formbett laufen.

8. Verfahren nach einem der vorhergehenden Ansprüche, bei dem sich die insbesondere aus Glas bestehenden Platten (1) nach ihrer Aufnahme auf der Aufnahmevorrichtung (5) bis zu einer weiteren Arbeitsstation, insbesondere einer Härtstation (15), aufgrund der Fortbewegung der mit einer Platte (1) beladenen Aufnahmevorrichtung (5) bis zu dieser weiteren Arbeitsstation weiterbewegen.

9. Anwendung des Verfahrens nach einem der vorhergehenden Ansprüche zum Biegen und zum Vorspannen oder zum Entspannen von Glasplatten (1), die auf einer im wesentlichen horizontalen Transportvorrichtung (9) zugeführt, während ihrer Weiterbewegung auf der Transportvorrichtung erhitzt und, falls notwendig, beschleunigt werden, wobei sie sich anschließend auf einer Fördereinrichtung (2) weiterbewegen, danach durch Fortsetzung ihrer Laufbahn über die Fördereinrichtung hinaus an eine Aufnahmevorrichtung (5) übergeben werden, die eine Biegeform wie etwa einen Rahmen aufweist, auf dem ihnen ein gekrümmtes Profil verliehen wird, und schließlich durch Fortbewegung der Aufnahmevorrichtung (5) zu einer Station zum Vorspannen (15) oder zum Entspannen weiterbefördert werden.

10. Verwendung nach Anspruch 8, wobei die Platten (1) nach ihrer Übergabe auf die Aufnahmevorrichtung (5) ein weiteres Mal erhitzt werden.

11. Vorrichtung zur Durchführung des Verfahrens nach einem der vorhergehenden Ansprüche, wobei die Vorrichtung umfaßt:

eine Fördereinrichtung (2), auf der die Platten (1) mit hoher Geschwindigkeit laufen, eine Aufnahmevorrichtung (5), die unterhalb des Endes der Fördereinrichtung und in Laufrichtung der Fördereinrichtung gesehen jenseits deren Ende und zum Zeitpunkt des Auftreffens der Platten (1) auf der Aufnahmevorrichtung (5) im wesentlichen parallel zur Laufbahn der Platten (1) angeordnet ist, und jedenfalls in einem Winkel in der vertikalen Ebene mit der Laufbahn, der nicht mehr als etwa 15°, vorzugsweise nicht mehr als etwa 10° beträgt.

12. Vorrichtung nach Anspruch 11, wobei die Aufnahmevorrichtung (5) in der gleichen Richtung wie die Laufrichtung der Fördereinrichtung beweglich angeordnet ist und sich insbesondere auf Schienen (13) fortbewegt.

13. Vorrichtung nach Anspruch 12, wobei die Fördereinrichtung (2) und die Laufbahn (13) der Aufnahmevorrichtung (5) miteinander in der vertikalen Ebene einen Winkel bilden, der so gering wie möglich ist und auf jeden Fall weniger als 15°, vorzugsweise 10°, beträgt.

14. Vorrichtung .nach Anspruch 12 oder 13, wobei die Fördereinrichtung (2) und die Laufbahn (13) der Aufnahmevorrichtung (5) beide nach unten geneigt sind.

15. Vorrichtung nach einem der Ansprüche 11 bis 14, wobei die Fördereinrichtung (2) so angeordnet ist, daß sie nach Übernahme einer Platte (1) geneigt wird.

16. Vorrichtung nach einem der Ansprüche 11 bis 15, wobei die Aufnahmevorrichtung (5) Anschläge (14) für die Vorderkante der auf dem vorderen Rand der Vorrichtung (5) aufliegenden Platten (1) aufweist.

17. Vorrichtung nach einem der Ansprüche 11 bis 15, wobei die Aufnahmevorrichtung (5) eine Bombageform, insbesondere einen auf einem auf Schienen (13) bewegbaren Wagen (6) angeordneten Biegerahmen aufweist.